# EUROPÄISCHE PATENTSCHRIFT

(11) **EP 1 415 834 B1**
(45) Veröffentlichungstag und Bekanntmachung des Hinweises auf die Patenterteilung: **06.10.2010**
(21) Anmeldenummer: 03024671.4
(22) Anmeldetag: 28.10.2003
(51) Int. Cl.: B60J 1/20, B60J 3/02

(54) **Sonnenblendenvorrichtung für Kraftfahrzeuge**
Sun visor for motor vehicles
Pare-soleil pour véhicules automobiles

(30) Priorität: 28.10.2002 FR 0213452
(43) Veröffentlichungstag der Anmeldung: 06.05.2004
(73) Patentinhaber: Webasto AG, 82131 Stockdorf (DE)
(72) Erfinder: Guicheteau, Jean-Luc, 49300 Cholet (FR)
(74) Vertreter: Epping - Hermann - Fischer

(56) Entgegenhaltungen:
- EP-A- 0 479 122
- EP-A- 0 945 293
- WO-A-98/39171
- DE-A- 4 244 757
- DE-A- 19 741 863
- DE-A- 19 810 199
- DE-C- 4 337 311
- US-A- 5 192 110
- US-A- 5 201 563
- US-A1- 2002 033 616

## Beschreibung

Die vorliegende Erfindung betrifft eine Sonnenblendenvorrichtung, die dazu bestimmt ist, im oberen Teil einer Windschutzscheibe eines Kraftfahrzeuges eingesetzt zu werden.

Es ist im Automobilbereich an sich bekannt, Sonnenblendenvorrichtungen im Bereich des oberen Teils der Windschutzscheibe zu verwenden, um einen Schutz gegen intensive Lichtquellen zu bieten. Es wird hier insbesondere an direkte Sonneneinstrahlung, aber auch an die Blendung durch Scheinwerfer anderer Verkehrsteilnehmer gedacht. Das Prinzip besteht darin, zwischen den Augen der Fahrzeuginsassen und der Lichtquelle im Bereich der Windschutzscheibe eine Blende anzubringen, genauer gesagt, den genannten Schirm knapp oberhalb des Teils des Gesichtsfeldes zu positionieren, der tatsächlich wirksam von den genannten Fahrzeuginsassen benutzt wird. Ziel ist natürlich, die Blendungsrisiken zu begrenzen, welche geeignet sind, den Fahrer zu stören und /oder die Insassen zu belästigen.

Üblicherweise verwendete Sonnenblendenvorrichtungen bestehen aus lichtundurchlässigen Blenden, die im Bereich der Dachhaut des Fahrzeuges angelenkt sind, so daß sie im wesentlichen nach vorne auf den oberen Teil der Windschutzscheibe und gegebenenfalls auch seitlich auf den oberen Teil eines vorderen Seitenfensters gerichtet werden können.

In der Praxis weist ein Kraftfahrzeug allgemein zwei Blenden auf, die an den beiden seitlichen vorderen Enden der Innenauskleidung der Dachhaut befestigt sind und die jeweils punktuell die Teile der Windschutzscheibe abzudunkeln vermögen, die beiderseits des Innenrückspiegels angeordnet sind. Im übrigen weist jede Blende im allgemeinen eine auf ca. 10 cm begrenzte Höhe und eine im wesentlichen der Hälfte der Breite der Windschutzscheibe entsprechende Breite auf.

Wenn nur die Hauptfunktion, d.h. also die Abdunkelung des oberen Teils der Windschutzscheibe, in Betracht gezogen wird, dann ist jede Blende konkret horizontal schwenkbeweglich einerseits zwischen einer Ruhelage, in der sie flach an der Innenverkleidung des Fahrzeuges anliegt, und andererseits einer Einsatzposition, bei der sie sich im wesentlichen zum oberen Teil der Windschutzscheibe parallel erstreckt.

Diese Art von Sonnenblendenvorrichtung weist jedoch den Nachteil auf, für Windschutzscheiben mit großer Höhe besonders schlecht geeignet zu sein.

Diese Panoramawindschutzscheiben, die früher im Prinzip ausschließlich Nutzfahrzeugen vorbehalten waren, sind heute seit Einführung der Großraumlimousinen und sonstiger Freizeitfahrzeuge stark verbreitet. Aufgrund ihrer großen Abmessungen sind sie besonders den Lichtstrahlen ausgesetzt, was insbesondere für ihren oberen Teil gilt. Es ist also unerläßlich, über ausreichend hohe Blenden verfügen zu können, um gegebenenfalls sehr große Flächen der Windschutzscheibe abdecken zu können. Überdimensionierte Blenden sind jedoch besonders schwierig zu bedienen, da sie einen übermäßig großen Platzbedarf haben, was entsprechend Platz erfordert, insbesondere um sie kippen zu können. Aufgrund der Gestaltung des Innenraums und/oder der Größe des Benutzers kann dieser und/oder der Größe des Benutzers kann dieser wesentliche Nachteil sogar unüberwindlich werden, wenn die Bewegung der Blende eine Bewegung des Kopfs des genannten Benutzers erfordert.

Wenn auch Blenden mit großen Abmessungen für Nutzfahrzeuge akzeptabel sind, so sind sie jedoch jedenfalls nicht ästhetisch und also für die Personenkraftwagen vom Typ Großraum- und/oder Freizeitfahrzeuge wenig geeignet. Es handelt sich hier um eine Problematik, die beispielsweise zu der der Außenrückspiegel identisch ist.

Die WO 98/39171 offenbart eine Sonnenblende für einen Fensterbereich eines Personenkraftfahrzeugs mit mehreren Sonnenblendenvorrichtungen. Jede der Sonnenblendenvorrichtungen umfasst eine Befestigungseinheit und eine Blendeneinheit. Die Befestigungseinheit umfasst ein Paar ausziehbarer Elemente mit jeweils einem ersten Rohr und einem zweiten Rohr, die koaxial an ihren Enden miteinander verbunden sind, derart, dass das Paar zweiter Rohre in dem Paar erster Rohre gleitend einziehbar ist. Jedes der ersten Rohre umfasst ein Halteelement. Die Blendeneinheit umfasst mindestens zwei dünne Streifen, von denen jedes drehbar zwischen einem Paar Halteelementen angeordnet ist.

Das zu lösende technische Problem, das Aufgabe der vorliegenden Erfindung ist, liegt darin, eine Sonnenblendenvorrichtung vorzuschlagen, die dazu bestimmt ist, im oberen Teil einer Windschutzscheibe eines Kraftfahrzeuges verwendet zu werden, wobei es die genannte Sonnenblendenvorrichtung ermöglicht, die Probleme nach dem Stand der Technik zu vermeiden, indem sie insbesondere eine wesentlich erleichterte Möglichkeit des Einsatzes bietet und gleichzeitig die Ästhetik des betreffenden Fahrzeuges und seines Innenraums unbeeinträchtigt läßt.

Die Lösung des gestellten technischen Problems besteht erfindungsgemäß darin, daß die Sonnenblendenvorrichtung mindestens zwei Lamellen aufweist, die zwischen einer Ruhelage, bei der die Lamellen in der Nähe des oberen Teils der Windschutzscheibe übereinander angeordnet sind, und einer Einsatzposition im wesentlichen parallel zur Windschutzscheibe schiebebeweglich bzw. gleitend beweglich montiert ist, bei der die genannten Lamellen in einer im wesentlichen koplanaren und bezüglich des genannten oberen Teils der Windschutzscheibe kontinuierlichen Weise ausgefahren sind.

Die so definierte Erfindung weist den Vorteil auf, ausgezeichnet für Windschutzscheiben mit großer Höhe geeignet zu sein. Die einziehbare Struktur der Sonnenblendenvorrichtung ermöglicht es zunächst einmal, eine größere Oberfläche im oberen Teil der Windschutzscheibe abzudecken, und sie bietet gleichzeitig insbesondere in der Ruhelage den Vorteil eines reduzierten Platzbedarfs. Die einziehbare Struktur ermöglicht es im übrigen, die Größe der Sonnenblendenvorrichtung präzise als Funktion der relativen Position der abzuschirmenden Lichtquelle anzupassen. Die einziehbare Struktur ermöglicht außerdem ein Ausziehen der Lamellen im wesentlichen parallel zur Windschutzscheibe, was es erlaubt, den im Inneren des Fahrzeuges verfügbaren Raum nicht zu beeinträchtigten, was einen verbesserten Komfort für die Fahrzeuginsassen bietet.

Außerdem ersetzt die erfindungsgemäße Vorrichtung die klassische zentrale Sonnenblende.

Die vorliegende Erfindung betrifft auch Eigenschaften, die sich aus der nachstehenden Beschreibung ergeben und die jeweils isoliert und nach ihren sämtlichen möglichen technischen Kombinationen in Betracht zu ziehen sind.

Weitere erfindungswesentliche Merkmale gehen aus der nachfolgenden Beschreibung hervor, in der mit Bezug auf die Zeichnungen Ausführungsbeispiele erläutert werden. In den Zeichnungen zeigen:
Fig. 1 eine perspektivische Ansicht von oben mit einer Teildarstellung eines Kraftfahrzeuges, das mit einer sich in der Einsatzposition befindlichen Sonnenblendenvorrichtung entsprechend der Erfindung ausgestattet ist;
Fig. 2 eine Teilansicht in der Perspektive von unten des in Fig. 1 dargestellten Kraftfahrzeuges;
Fig. 3 eine zur Fig. 1 analoge Ansicht, jedoch befindet sich die Sonnenblendenvorrichtung in der Ruhelage;
Fig. 4 eine zur Fig. 2 analoge Darstellung, jedoch mit der Sonnenblendenvorrichtung in der Ruhelage; und Fig. 5 eine zur Fig. 3 analoge Darstellung.

Aus Gründen der Klarheit werden die gleichen Elemente jeweils mit identischen Bezugszeichen bezeichnet. Des weiteren wurden lediglich die für das Verständnis der Erfindung wesentlichen Elemente dargestellt, wobei die Maßstäbe nicht eingehalten wurden und die Darstellung jeweils schematisch ist.

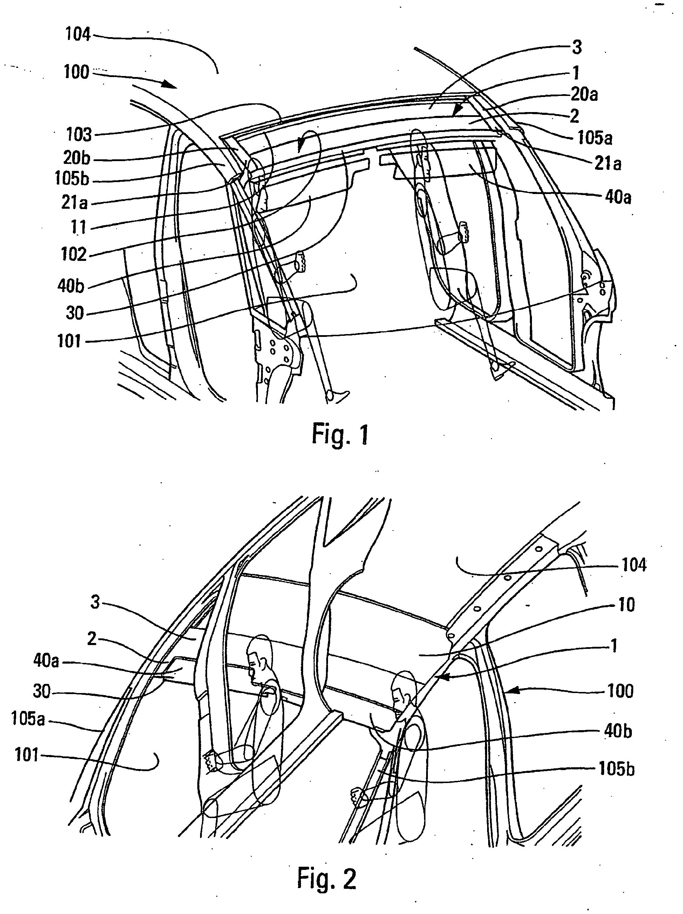

Die Figuren 1 bis 5 zeigen ein Kraftfahrzeug 100, welches mit einer Sonnenblendenvorrichtung 1 ausgestattet ist, die in dem oberen Teil 102 der Windschutzscheibe 101 desselben benutzt werden kann.

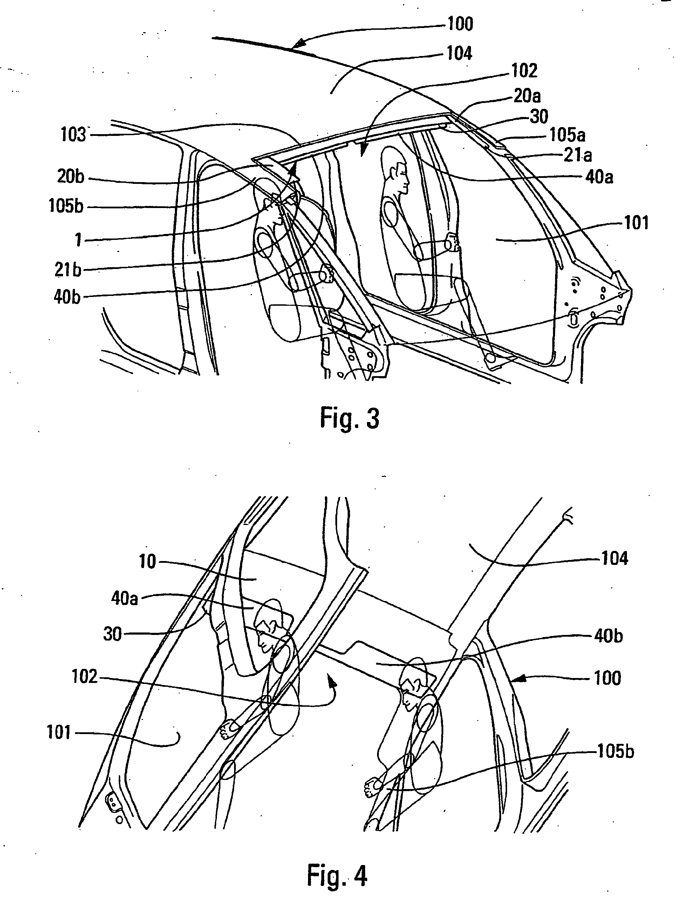

Entsprechend der Erfindungsaufgabe weist die Sonnenblendenvorrichtung 1 zwei Lamellen 2, 3 auf, die zwischen einer in den Figuren 3 und 4 sichtbaren Ruhelage und einer in den Figuren 1, 2 und 5 zu sehenden Einsatzstellung gleitend beweglich montiert sind. Das Ganze ist in der Weise angeordnet, daß die Lamellen 2, 3 in der Ruhelage übereinander an einer Stelle positioniert sind, die nicht vor dem oberen Teil 102 der Windschutzscheibe 101 liegt. Es ist im übrigen anzumerken, daß die Stapelung der Lamellen 2, 3 unabhängig von oben, also von unten nach oben, oder von unten, also von oben nach unten, erfolgen kann. In der Einsatzstellung ist die Vorrichtung so gestaltet, daß die Lamellen 2, 3 dann im wesentlichen koplanar und kontinuierlich zueinander auf der Höhe der Windschutzscheibe 101 ausgefahren sind, genauer gesagt gegenüber ihrem oberen Teil 102.

Nach einer Besonderheit der Erfindung sind die Lamellen 2, 3 relativ zur Windschutzscheibe 101 quer angeordnet und außerdem geeignet, in Längsrichtung ebenfalls hinsichtlich der genannten Windschutzscheibe 101 bewegt zu werden. Dies bedeutet, daß die Lamellen 2, 3 parallel zur Oberkante 103 der Windschutzscheibe 101 angeordnet sind, und daß sie geeignet sind, von oben nach unten auf der Höhe des oberen Teils 102 der genannten Windschutzscheibe 101 nach einer Richtung entsprechend der Fahrzeugachse ausgefahren zu werden. Diese Eigenschaft ermöglicht es vorteilhafterweise, das untere Ende der Sonnenblendenvorrichtung 1 zu verändern und somit die Größe der genannten Vorrichtung als Funktion der relativen Position der Lichtquelle in bezug auf das Sichtfeld des Benutzers anzupassen.

Wie dies insbesondere in den Figuren 1, 3 und 5 zu sehen ist, sind die Lamellen 2, 3 geeignet, in einer im wesentlichen zum oberen Teil der Windschutzscheibe parallelen Weise zu gleiten. Natürlich wird diese relative besondere Positionierung bis zur Einsatzstellung beibehalten. Dies ermöglicht es vorteilhafterweise, den Platzbedarf der Sonnenblendenvorrichtung 1 in der Einsatzstellung auf ein Minimum zu reduzieren.

Nach einer weiteren Besonderheit der Erfindung weist die Sonnenblendenvorrichtung 1 eine Aufnahme 10 auf, welche geeignet ist, die Lamellen 2, 3 in der Ruhelage aufzunehmen. Die genannte Aufnahme 10 hat die Form eines Volumens, dessen Basis Abmessungen aufweist, die mindestens der Oberfläche einer Lamelle 2, 3 entsprechen und deren Höhe im wesentlichen der kumulierten Dicke sämtlicher Lamellen 2, 3 entspricht, wenn diese übereinander angeordnet sind. Das Volumen der Aufnahme 10 kann natürlich größer sein, wenn dort in vorteilhafter Weise Antriebsmittel mit untergebracht sind, welche später zu beschreiben sein werden. Natürlich weist die Aufnahme 10 eine Öffnung 11 auf, die das Eintreten und das Austreten der Lamellen 2, 3 ermöglicht.

Wie insbesondere in den Figuren 2 und 4 zu sehen ist, ist die Einlagerungsaufnahme 10 in Querrichtung mit dem vordersten Teil der Dachhaut 104 des Kraftfahrzeuges 100 fest verbunden. Die Öffnung 11 derselben ist ihrerseits parallel und im wesentlichen an die Oberkante 103 der Windschutzscheibe 101 anschließend positioniert. Die Tatsache, daß die Aufnahme 10 mit der Dachhaut 104 fest verbunden ist, bedeutet jeweils, daß die Aufnahme 10 an der eigentlichen Struktur der Karosserie oder an der Innenauskleidung dieses Teils des Kraftfahrzeuges 100 befestigt werden kann. Bei diesem Ausführungsbeispiel ist die Aufnahme 10 an der Karosserie befestigt und sie wird durch die Innenauskleidung der Dachhaut 104 abgedeckt.

Nach einer weiteren Besonderheit der Erfindung weist die Sonnenblendenvorrichtung 1 zwei Gleitschienen 20a, 20b auf, welche geeignet sind, Lamellen 2, 3 in einer Gleitbewegung zwischen ihrer Ruhelage und ihrer Einsatzstellung zu führen.

Wie in der Gesamtheit der Figuren zu sehen ist, sind die beiden Führungsgleitschienen 20a, 20b in der Verlängerung der Seitenteile der Aufnahme 10 angeordnet. Sie erstrecken sich im übrigen jeweils längs der beiden seitlichen Säulen 105a, 105b der Karosserie, zwischen denen in Querrichtung die Windschutzscheibe 101 angeordnet ist.

In einer besonders vorteilhaften Weise entspricht die Länge der Führungsgleitschienen 20a, 20b im wesentlichen der kumulierten Höhe sämtlicher Lamellen 2, 3 in der Einsatzstellung, so daß die freien Enden 21a, 21b der genannten Führungsgleitschienen 20a, 20b am unteren Bereich des oberen Teils 102 der Windschutzscheibe 101 stehenbleiben.

Nach einer weiteren Besonderheit der Erfindung weist die Sonnenblendenvorrichtung 1 Verbindungsmittel auf, welche geeignet sind, die Lamellen 2, 3 einzeln miteinander zu verbinden und ihr gegenseitiges Mitnehmen bei der Gleitbewegung der distalen Lamelle 2 in den Führungsgleitschienen 20a, 20b zu erlauben. Dieses gegenseitige Mitnehmen der Lamellen 2, 3 während des Ausziehens und des Einfahrens bzw. Zurückziehens wird mit Hilfe von Verbindungsmitteln realisiert, die von einem beliebigen an sich bekannten Typ sein können. Insbesondere wird an diejenigen gedacht, die üblicherweise bei Jalousien verwendet werden, welche dazu bestimmt sind, parallel zu Glasscheiben ausgefahren zu werden, die ein Schiebedach oder eine Dachhaut bilden.

Anzumerken ist, daß unabhängig davon, ob sie mechanisiert erfolgt oder nicht, die Bewegung der Lamellen 2, 3 beim Ausziehen oder beim Einfahren in der Praxis dadurch erfolgt, daß auf die Lamelle eingewirkt wird, die in bezug auf den Bereich der Ruhelage am weitesten vorne liegt, d.h. also die distale Lamelle 2. Bei der Phase des Ausziehens zieht die distale Lamelle 2 die direkt anschließende Lamelle 3, welche wiederum ihrerseits in der Lage ist, dank der verwendeten Verbindungsmittel eine eventuelle weitere Lamelle mitzunehmen. Im Gegensatz dazu schiebt während der Phase des Einfahrens die distale Lamelle 2 einfach die anderen Lamellen in Richtung auf die Einlagerungsaufnahme 10, indem sie sie gleitend längs der Führungsgleitschienen 20a, 20b mitnimmt.

Nach einer weiteren Besonderheit der Erfindung weist die Sonnenblendenvorrichtung 1 Trennmittel auf, welche geeignet sind, die Lamellen 2, 3 in der Aufnahme 10 zu trennen und ihre Anordnung übereinander ebenfalls in der Aufnahme 10 zu erlauben. Konkret sind diese Trennmittel in der Aufnahme 10 positioniert und üben ihre Aktion während der Einlagerungsphase aus, wobei die aneinander anschließenden Lamellen 2, 3 geeignet sind, relativ zueinander in der Aufnahme 10 zu gleiten. Natürlich entsprechen die Trennmittel den verwendeten an sich bekannten Verbindungsmitteln und sind dementsprechend selbst an sich bekannt.

Nach einer weiteren Besonderheit der Erfindung weist die Sonnenblendenvorrichtung 1 eine taillierte Verstärkung 30 auf, welche mit dem vorderen Teil der distalen Lamelle 2 fest verbunden und geeignet ist, deren Form zu halten. Da in der Tat das Innere des Fahrzeuges im allgemeinen durch konkave Flächen begrenzt wird, dies gilt insbesondere für den Bereich der Dachhaut und der Windschutzscheibe 101, ist es durchaus angezeigt, auch konkave Lamellen 2, 3 zu verwenden, um deren Flächen bestmöglich an die Umgebung anzupassen und somit das Innenvolumen des genannten Innenraums aufrechtzuerhalten. Da jedoch die Lamellen 2, 3 aufgrund ihrer im Vergleich zu ihrer sehr geringen Dicke relativ großen Oberfläche im allgemeinen eine flexible Struktur aufweisen, ist es vorteilhaft, den vorderen Teil der distalen Lamelle 2, also derjenigen, die im Prinzip am meisten beansprucht wird, zu verstärken.

In besonders vorteilhafter Weise ist die Taillierung der Verstärkung 30 im wesentlichen identisch zur Querkrümmung des oberen Teils 102 der Windschutzscheibe 101. Diese Eigenschaft ermöglicht es den Lamellen 2, 3, sich bestmöglich an die Innenfläche der Windschutzscheibe 101 anzupassen, was den Platzbedarf der Sonnenblendenvorrichtung 1 in der Einsatzstellung minimiert.

Nach einem weiteren vorteilhaften Erfindungsmerkmal ist die taillierte Verstärkung 30 geeignet, die Öffnung 11 der Aufnahme 10 dann abzudecken, wenn die Lamellen 2, 3 in der Ruhelage befindlich sind. Aus im wesentlichen ästhetischen Gründen kann die taillierte Verstärkung 30 sogar eine Form aufweisen, die im wesentlichen zur Öffnung 11 der Aufnahme 10 komplementär ist.

Nach einer weiteren Besonderheit der Erfindung, die aus Übersichtlichkeitsgründen in den verschiedenen Figuren nicht dargestellt wird, kann die Sonnenblendenvorrichtung 1 Antriebsmittel aufweisen, die geeignet sind, die Gleitbewegung der Lamellen 2, 3 zwischen ihrer Ruhelage und ihrer Einsatzstellung zu mechanisieren. Beispielsweise können die Antriebsmittel einen Motor aufweisen, der auf zwei angespritzte Kabel einwirkt, die jeweils mit den beiden seitlichen Enden der distalen Lamelle 2 und vorteilhafterweise der beiden seitlichen Enden der taillierten Verstärkung 30 fest verbunden sind.

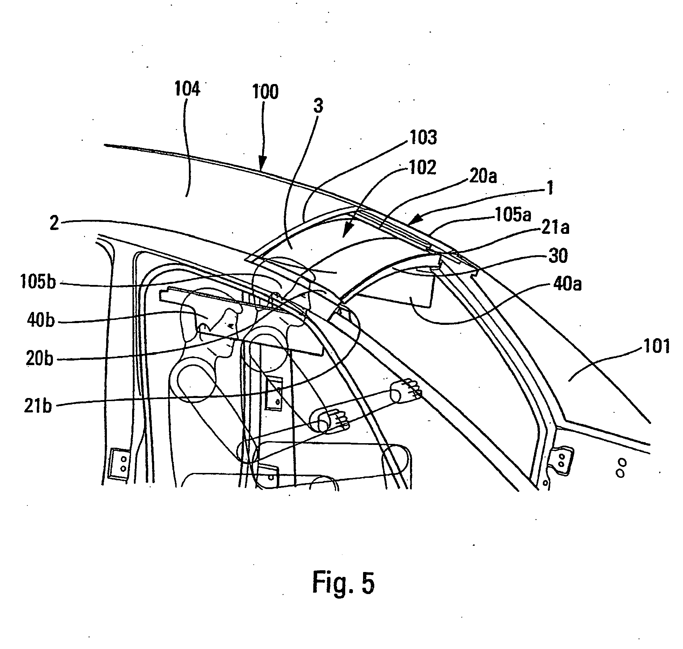

Bei dem besonderen Ausführungsbeispiel, das in den Figuren 1 bis 5 dargestellt wird, weist die Sonnenblendenvorrichtung 1 außerdem zwei übliche Sonnenblenden 40a, 40b auf, die insofern nicht weiter beschrieben werden. Es wird lediglich dazu ausgeführt, daß die Sonnenblenden 40a, 40b an jedem Ende der taillierten Verstärkung 30 angelenkt und insbesondere geeignet sind, in Längsrichtung gegen die Windschutzscheibe 101 ausgefahren zu werden (Fig. 1) oder seitlich längs der Seitenscheiben (Fig. 5) des Kraftfahrzeuges 100.

Vorteilhafterweise kann die Sonnenblendenvorrichtung 1 auch mit mindestens einem Spiegel versehen sein, der dann vorzugsweise an der Innenfläche der distalen Lamelle 2 befestigt wird.

Selbstverständlich betrifft die Erfindung auch jedes Kraftfahrzeug, das mit einer wie oben beschriebenen Sonnenblendenvorrichtung ausgestattet ist.

## Patentansprüche

1. Sonnenblendenvorrichtung (1), welche dazu bestimmt ist, in dem oberen Teil (102) einer Windschutzscheibe (101) eines Kraftfahrzeuges (100) eingesetzt zu werden, wobei sie mindestens zwei Lamellen (2, 3) aufweist, **dadurch gekennzeichnet, daß** die Lamellen zwischen einer Ruhelage, bei der die Lamellen (2, 3) in
der Nähe des oberen Teils (102) der Windschutzscheibe (101) übereinander angeordnet sind, und einer Einsatzstellung, im wesentlichen parallel zur Windschutzscheibe (101) gleitend beweglich montiert ist, bei der die Lamellen (2, 3) in einer im wesentlichen koplanaren und bezüglich des oberen Teils der Windschutzscheibe kontinuierlichen Weise ausgefahren sind.

2. Sonnenblendenvorrichtung (1) nach Anspruch 1, **dadurch gekennzeichnet, daß** die Lamellen (2, 3) quer angeordnet und geeignet sind, bezüglich der Windschutzscheibe (101) in Längsrichtung zu gleiten.

3. Sonnenblendenvorrichtung (1) nach Anspruch 1 oder 2, **dadurch gekennzeichnet, daß** die Lamellen (2, 3) geeignet sind, in einer im wesentlichen zum oberen Teil (102) der Windschutzscheibe (101) parallelen Weise zu gleiten.

4. Sonnenblendenvorrichtung (1) nach einem der Ansprüche 1 bis 3, **dadurch gekennzeichnet, daß** sie eine Aufnahme (10) aufweist, welche geeignet ist, die Lamellen (2, 3) in Ruhelage aufzunehmen.

5. Sonnenblendenvorrichtung (1) nach Anspruch 4, **dadurch gekennzeichnet, daß** die Aufnahme (10) dazu bestimmt ist, in Querrichtung fest mit dem am weitesten vorne liegenden Teil der Dachhaut (104) des Fahrzeuges (100) verbunden zu werden, wobei die Öffnung (11) der Aufnahme (10) dazu bestimmt ist, parallel und in einer zur Oberkante 103 der Windschutzscheibe 101 benachbarten Position angeordnet zu sein.

6. Sonnenblendenvorrichtung (1) nach einem der Ansprüche 1 bis 5, **dadurch gekennzeichnet, daß** sie zwei Gleitschienen (20a, 20b) aufweist, welche in der Lage sind, die Gleitbewegung der Lamellen 2, 3 zwischen ihrer Ruhelage und ihrer Einsatzstellung zu führen.

7. Sonnenblendenvorrichtung (1) nach Anspruch 6, **dadurch gekennzeichnet, daß** die beiden Führungsgleitschienen (20a, 20b) in der Verlängerung der Seitenteile der Aufnahme (10) angeordnet und dazu bestimmt sind, sich jeweils längs der seitlichen Säulen (105a, 105b) der Karosserie, zwischen denen in Querrichtung die Windschutzscheibe 101 angeordnet ist, zu erstrecken.

8. Sonnenblendenvorrichtung (1) nach Anspruch 6 oder 7, **dadurch gekennzeichnet, daß** die Länge der Führungsgleitschienen (20a, 20b) im wesentlichen der Gesamthöhe sämtlicher Lamellen (2, 3) in der Einsatzstellung entspricht.

9. Sonnenblendenvorrichtung (1) nach einem der Ansprüche 6 bis 8, **dadurch gekennzeichnet, daß** sie Verbindungsmittel aufweist, welche geeignet sind, die einzelnen Lamellen (2, 3) miteinander zu verbinden und ihr gegenseitiges Mitnehmen bei der Gleitbewegung der distalen Lamelle (2) in den Führungsgleitschienen (20a, 20b) zu erlauben.

10. Sonnenblendenvorrichtung (1) nach einem der Ansprüche 4 bis 9, **dadurch gekennzeichnet, daß** sie Trennmittel aufweist, welche geeignet sind, die Lamellen (2, 3) zu trennen und ihre Anordnung in der Aufnahme (10) übereinander zu erlauben.

11. Sonnenblendenvorrichtung (1) nach einem der Ansprüche 1 bis 10, **dadurch gekennzeichnet, daß** sie eine taillierte Verstärkung (30) aufweist, welche fest mit dem Vorderteil der distalen Lamelle (2) verbunden und geeignet ist, deren Form aufrechtzuerhalten.

12. Sonnenblendenvorrichtung (1) nach Anspruch 11, **dadurch gekennzeichnet, daß** die Taillierung der Verstärkung (30) im wesentlichen der Querkrümmung des oberen Teils (102) der Windschutzscheibe (101) identisch ist.

13. Sonnenblendenvorrichtung (1) nach Anspruch 11 oder 12, **dadurch gekennzeichnet, daß** die taillierte Verstärkung (30) geeignet ist, die Öffnung (11) der Aufnahme (10) abzudecken, wenn sich die Lamellen (2, 3) in der Ruhelage befinden.

14. Sonnenblendenvorrichtung (1) nach einem der Ansprüche 1 bis 13, **dadurch gekennzeichnet, daß** sie Antriebsmittel aufweist, welche geeignet sind, die Gleitbewegung der Lamellen (2, 3) zwischen ihrer Ruhelage und ihrer Einsatzstellung zu erzeugen.

15. Sonnenblendenvorrichtung (1) nach Anspruch 14, **dadurch gekennzeichnet, daß** die Antriebsmittel einen Motor aufweisen, der auf zwei angespritzte Kabel einwirkt, die jeweils mit den beiden seitlichen Enden der distalen Lamelle (2) fest verbunden sind.

16. Sonnenblendenvorrichtung (1) nach einem der Ansprüche 11 bis 15, **dadurch gekennzeichnet, daß** sie mindestens eine Standardsonnenblende (40a, 40b) aufweist, die mit der taillierten Verstärkung (30) fest verbunden ist.

17. Sonnenblendenvorrichtung (1) nach einem der Ansprüche 1 bis 16, **dadurch gekennzeichnet, daß** sie mindestens einen mit der distalen Lamelle (2) fest verbundenen Spiegel aufweist.

## Claims

1. Sun visor device (1) which is intended to be used in the upper part (102) of a windscreen (101) of a motor vehicle (100), wherein said sun visor device has at least two slats (2, 3), **characterized in that** the slats are mounted movably in a sliding manner substantially parallel to the windscreen (101) between a rest position, in which the slats (2, 3) are arranged one above the other in the vicinity of the upper part (102) of the windscreen (101), and a use position, in which the slats (2, 3) are extended in a substantially coplanar and continuous manner with respect to the upper part of the windscreen.

2. Sun visor device (1) according to Claim 1, **characterized in that** the slats (2, 3) are arranged transversely and are suitable for sliding in the longitudinal direction with respect to the windscreen (101).

3. Sun visor device (1) according to Claim 1 or 2, **characterized in that** the slats (2, 3) are suitable for sliding in a manner substantially parallel to the upper part (102) of the windscreen (101).

4. Sun visor device (1) according to one of Claims 1 to 3, **characterized in that** said sun visor device has a receptacle (10) which is suitable for receiving the slats (2, 3) in the rest position.

5. Sun visor device (1) according to Claim 4, **characterized in that** the receptacle (10) is intended to be connected fixedly in the transverse direction to that part of the roof skin (104) of the vehicle (100) which is situated furthest forwards, the opening (11) in the receptacle (10) being intended to be arranged parallel and in a position adjacent to the upper edge (103) of the windscreen (101).

6. Sun visor device (1) according to one of Claims 1 to 5, **characterized in that** said sun visor device has two sliding rails (20a, 20b) which are capable of guiding the sliding movement of the slats (2, 3) between the rest position thereof and the use position thereof.

7. Sun visor device (1) according to Claim 6, **characterized in that** the two guide sliding rails (20a, 20b) are arranged in the extension of the side parts of the receptacle (10) and are intended for extending in each case along the lateral pillars (105a, 105b) of the bodywork, between which the windscreen (101) is arranged in the transverse direction.

8. Sun visor device (1) according to Claim 6 or 7, **characterized in that** the length of the guide sliding rails (20a, 20b) substantially corresponds to the overall height of all the slats (2, 3) in the use position.

9. Sun visor device (1) according to one of Claims 6 to 8, **characterized in that** said sun visor device has connecting means which are suitable for connecting the individual slats (2, 3) to each other and for permitting the mutual carrying along thereof during the sliding movement of the distal slat (2, 3) in the guide sliding rails (20a, 20b).

10. Sun visor device (1) according to one of Claims 4 to 9, **characterized in that** said sun visor device has separating means which are suitable for separating the slats (2, 3) and for permitting the arrangement thereof one above the other in the receptacle (10).

11. Sun visor device (1) according to one of Claims 1 to 10, **characterized in that** said sun visor device has a narrowed reinforcement (30) which is connected fixedly to the front part of the distal slat (2) and is suitable for maintaining the shape thereof.

12. Sun visor device (1) according to Claim 11, **characterized in that** the narrowing of the reinforcement (30) is substantially identical to the transverse curvature of the upper part (102) of the windscreen (101).

13. Sun visor device (1) according to Claim 11 or 12, **characterized in that** the narrowed reinforcement (30) is suitable for covering the opening (11) in the receptacle (10) when the slats (2, 3) are in the rest position.

14. Sun visor device (1) according to one of Claims 1 to 13, **characterized in that** said sun visor device has driving means which are suitable for producing the sliding movement of the slats (2, 3) between the rest position thereof and the use position thereof.

15. Sun visor device (1) according to Claim 14, **characterized in that** the driving means have a motor which acts on two moulded-on cables which are connected fixedly in each case to the two lateral ends of the distal slat (2).

16. Sun visor device (1) according to one of Claims 11 to 15, **characterized in that** said sun visor device has at least one standard sun visor (40, 40b) which is connected fixedly to the narrowed reinforcement (30).

17. Sun visor device (1) according to one of Claims 1 to 16, **characterized in that** said sun visor device has at least one mirror connected fixedly to the distal slat (2).

## Revendications

1. Pare-soleil (1) conçu pour être utilisé dans la partie supérieure (102) d'un pare-brise (101) d'un véhicule automobile (100), comportant au moins deux lamelles (2, 3), **caractérisé en ce que** les lamelles sont disposées l'une au-dessus de l'autre entre une position au repos dans laquelle les lamelles (2, 3) sont à proximité de la partie supérieure (102) du pare-brise (101) et une position d'utilisation montée pour l'essentiel parallèlement au pare-brise (101) de façon mobile par glissement dans laquelle les lamelles (2, 3) sont sorties de façon pour l'essentiel coplanaire et continue par rapport à la partie supérieure du pare-brise.

2. Pare-soleil (1) selon la revendication 1, **caractérisé en ce que** les lamelles (2, 3) sont disposées transversalement et conçues pour glisser dans la direction longitudinale par rapport au pare-brise (101).

3. Pare-soleil (1) selon la revendication 1 ou 2, **caractérisé en ce que** les lamelles (2, 3) sont conçues pour glisser pour l'essentiel parallèlement par rapport à la partie supérieure (102) du pare-brise (101).

4. Pare-soleil (1) selon l'une quelconque des revendications 1 à 3, **caractérisé en ce qu'**il comporte un logement (10) adapté pour recevoir les lamelles (2, 3) dans la position au repos.

5. Pare-soleil (1) selon la revendication 4, **caractérisé en ce que** le logement (10) est conçu pour être relié fixement dans la direction transversale à la partie la plus avancée du panneau de toit (104) du véhicule (100), l'ouverture (11) du logement (10) étant conçue pour être disposée parallèlement et dans une position connexe par rapport à l'arête supérieure (103) du pare-brise (101).

6. Pare-soleil (1) selon l'une quelconque des revendications 1 à 5, **caractérisé en ce qu'**il comporte deux rails de glissement (20a, 20b) se trouvant dans une position permettant de guider le mouvement de glissement des lamelles 2, 3 entre leur position au repos et leur position d'utilisation.

7. Pare-soleil (1) selon la revendication 6, **caractérisé en ce que** les deux rails de guidage par glissement (20a, 20b) sont disposés dans le prolongement des parties latérales du logement (10) et conçus pour s'étendre respectivement le long des montants latéraux (105a, 105b) de la carrosserie entre lesquels le pare-brise (101) est disposé dans la direction transversale.

8. Pare-soleil (1) selon la revendication 6 ou 7, **caractérisé en ce que** la longueur des rails de guidage par glissement (20a, 20b) correspond pour l'essentiel à la hauteur totale de l'ensemble des lamelles (2, 3) dans la position d'utilisation.

9. Pare-soleil (1) selon l'une quelconque des revendications 6 à 8, **caractérisé en ce qu'**il comporte des moyens de jonction conçus pour relier entre elles les différentes lamelles (2, 3) et pour permettre leur emboîtement réciproque lors du mouvement de glissement de la lamelle (2) distale dans les rails de guidage par glissement (20a, 20b).

10. Pare-soleil (1) selon l'une quelconque des revendications 4 à 9, **caractérisé en ce qu'**il comporte des moyens de séparation conçus pour séparer les lamelles (2, 3) et permettre leur agencement superposé dans le logement (10).

11. Pare-soleil (1) selon l'une quelconque des revendications 1 à 10, **caractérisé en ce qu'**il comporte un renforcement (30) taillé qui est relié fixement à la partie avant de la lamelle (2) distale et est conçu pour maintenir sa forme.

12. Pare-soleil (1) selon la revendication 11, **caractérisé en ce que** la partie taillée du renfort (30) est pour l'essentiel identique à la courbure transversale de la partie supérieure (102) du pare-brise (101).

13. Pare-soleil (1) selon la revendication 11 ou 12, **caractérisé en ce que** le renfort (30) taillé est adapté pour couvrir l'ouverture (11) du logement (10) lorsque les lamelles (2, 3) se trouvent dans la position au repos.

14. Pare-soleil (1) selon l'une quelconque des revendications 1 à 13, **caractérisé en ce qu'**il comporte des moyens d'entraînement adaptés pour produire le mouvement de glissement des lamelles (2, 3) entre leur position au repos et leur position d'utilisation.

15. Pare-soleil (1) selon la revendication 14, **caractérisé en ce que** les moyens d'entraînement comportent un moteur qui agit sur deux câbles moulés par injection respectivement reliés fixement aux deux extrémités latérales de la lamelle distale (2).

16. Pare-soleil (1) selon l'une quelconque des revendications 11 à 15, **caractérisé en ce qu'**il comporte au moins un cache-soleil standard (40a, 40b) relié fixement au renfort (30) taillé.

17. Pare-soleil (1) selon l'une quelconque des revendications 1 à 16, **caractérisé en ce qu'**il comporte au moins un miroir relié fixement à la lamelle distale (2).
